# EUROPEAN PATENT SPECIFICATION

(11) **EP 1 780 989 B1**
(45) Date of publication and mention of the grant of the patent: **22.09.2010**
(21) Application number: 05110024.6
(22) Date of filing: 26.10.2005
(51) Int. Cl.: H04M 1/03, H04R 1/08

(54) **Microphone coupler for a communication device**
Mikrofonkoppler für ein Kommunikationsgerät
Coupleur de microphone pour un dispositif de communication

(43) Date of publication of application: 02.05.2007
(60) Divisional application: 10172003.5
(73) Proprietor: RESEARCH IN MOTION LIMITED, Waterloo, Ontario N2L 3W8 (CA)
(72) Inventor: Hawker, Larry, N2T 2W6, Waterloo (CA); Mankaruse, George, N2M 5G1, Kitchener, (CA); Infanti, James, N2V 2K5, Waterloo (CA)
(74) Representative: Moore, Barry

(56) References cited:
- EP-A- 0 661 902
- EP-A- 0 707 403
- US-A- 6 091 830
- PATENT ABSTRACTS OF JAPAN vol. 1995, no. 11, 26 December 1995 (1995-12-26) -& JP 07 202997 A (NEC CORP), 4 August 1995 (1995-08-04)

## Description

The invention relates to a microphone coupler for a communication device. In particular, the invention provides a microphone coupler providing a conduit allowing a microphone for the device to be placed in different locations while maintaining acceptable levels of acoustic performance for the microphone.

Many types of electronic communication devices provide voice communication capabilities, such as telephones, cellular telephones and walkie talkies. Generally, such devices have a handset incorporating a microphone and a speaker. The microphone takes the locally generated audible signals (e.g. a user's voice) and the speaker recreates the remotely received audible signals (e.g. the other party's voice). Electronic circuits connected to the microphone convert the locally generated audible signals into electronic signals for further processing and transmission by the device. Other electronic circuits provide the electronic signals embodying the received audible signals to the speaker. General performance parameters influence the placement of the microphone and speaker in such devices. For example, the microphone should be sufficiently isolated from interference generated from other components, but it still needs to be able to receive the locally generated audible signals.

In a typical stationary communication device (such as an office telephone) its handset is shaped such that the microphone and speaker are in a spaced relationship to each other. When the handset is properly placed near a user's face, the speaker is located near an ear of the user and the microphone is located near the user's mouth. As portability is not generally the most critical issue for a stationary device, the handset can be made large enough such that the microphone, speaker and other components can be mounted at different areas within the handset and can each operate without unacceptably interfering with each other.

Meanwhile, portable communication devices, such as cellular phones, have smaller form factors. Locating the microphone and speaker in an appropriate spaced relationship within their form factors is more difficult, because of the smaller size of the handsets and the increased density of internal components. Further, their antennae generate interfering signals for some components. As such, suitable locations for the speaker and microphones in the devices become harder to find.

JP07202997 discloses an electronic device comprising a microphone and a plurality of "sound holes" (apertures in the device housing), a sound groove forming a sound channel for conveying an acoustic signal from the sound holes to the microphone, thereby removing the microphone from direct exposure to the user's breath.

There is a need for an arrangement which addresses such issues in the prior art.

In a first aspect, a communication device is provided. The device comprises: a printed circuit board 'PCB'; a platform connected to said PCB, said platform having an aperture therein; a microphone; an antenna; a housing for housing said PCB, said microphone and said antenna, said housing providing an opening for receiving an acoustic signal, said microphone located in a first location on said PCB in said housing, said antenna located in a second location in said housing, said opening located in a third location on said housing; a boot assembly a first part of which encloses said microphone, said boot assembly forming part of an acoustic channel for conveying said acoustic signal from said opening to said microphone, said acoustic channel further formed by a bottom surface of said platform when said platform is mounted over said boot assembly and part of said acoustic channel connects to a bottom side of said aperture in said platform; and a gasket having an internal conduit, said gasket mounted at one end to a top side of said aperture and at another end to said opening, wherein a first distance between said microphone and said antenna exceeds a second distance between said opening and said antenna.

In the device, the platform may further comprise a frame shaped to hold the assembly underneath the frame.

In the device, the opening in the housing may be located in a lower end of the housing.

In the device, the microphone may be mounted on the PCB with its aperture facing upward from the PCB.

In the device, the boot assembly may comprise: a coupling section shaped to hold the microphone with its aperture facing upward from the PCB; a beam extending outwardly from the coupling section; a wall extending above a perimeter of the beam, forming a channel within the wall and above the beam and with an air gap above the aperture of the microphone and the volume.

In the device, the conduit may form a first 90 degree turn from the microphone and a second 90 degree turn to the aperture in the support.

In the device, an acoustic mesh may be provided in the acoustic channel.

In the device, digital signal processing may be provided to adjust signals generated by the microphone to accommodate for acoustic characteristics of the acoustic channel.

In the device, a keypad may be mounted on a top surface of the platform.

In the device, the coupling section may comprise a lateral rib extending around its exterior to mate with an interior surface of the frame of the platform.

In other aspects various combinations of sets and subsets of the above aspects are provided.

### BRIEF DESCRIPTION OF DRAWINGS

The foregoing and other aspects of the invention will become more apparent from the following description of specific embodiments thereof and the accompanying drawings which illustrate, by way of example only, the principles of the invention. In the drawings, where like elements feature like reference numerals (and wherein individual elements bear unique alphabetical suffixes):

Figure 1 is a schematic representation of a communication device incorporating an embodiment of the invention;

Figure 2 is a block diagram of internal components of the communication device of Fig. 1, including a microphone and a microphone boot assembly;

Figure 3 is a schematic representation of an exploded upper perspective view of components in a bottom section of the device of Figs. 1 and 2, including a portion of a lower housing, a portion of a printed circuit board (PCB), the microphone, the microphone boot assembly, a keypad support, a keypad, a microphone gasket and a portion of an upper housing;

Figure 4A is a schematic representation of a lower perspective view of the keypad support of Fig. 3 having the microphone boot assembly inserted therein;

Figure 4B is a schematic representation of an upper perspective view of the keypad support of Fig. 3 having the microphone gasket mounted in place;

Figure 5 is a side cross-section view of the bottom section of the components shown in Fig. 3;

Figure 6A is a top view of the microphone boot assembly of Fig. 3;

Figure 6B is a side view of the microphone boot assembly of Fig. 3;

Figure 6C is a side cross-section view of the microphone boot assembly of Fig. 3;

Figure 6D is a bottom view of the microphone boot assembly of Fig. 3;

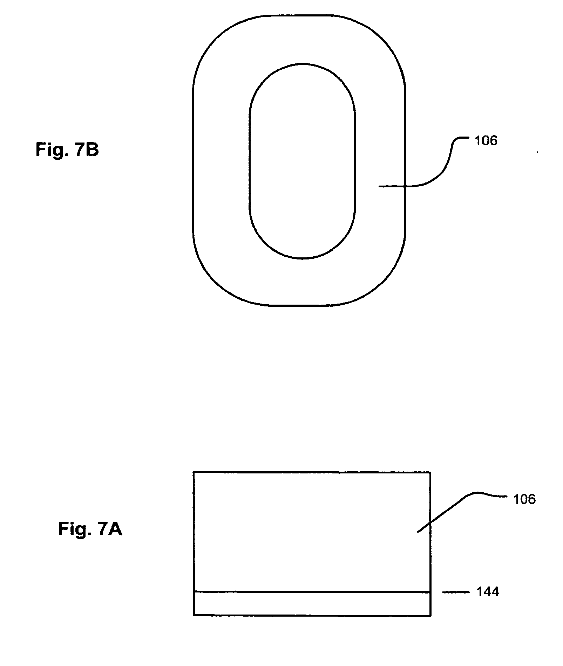

Figure 7A is a side view of the gasket of Fig. 3; and

Figure 7B is a top view of the gasket of Fig. 3.

### DESCRIPTION OF PREFERRED EMBODIMENTS

The description which follows and the embodiments described therein are provided by way of illustration of examples of particular embodiments of the principles of the present invention. These examples are provided for the purposes of explanation and not limitation of those principles and of the invention. In the description which follows, like parts are marked throughout the specification and the drawings with the same respective reference numerals.

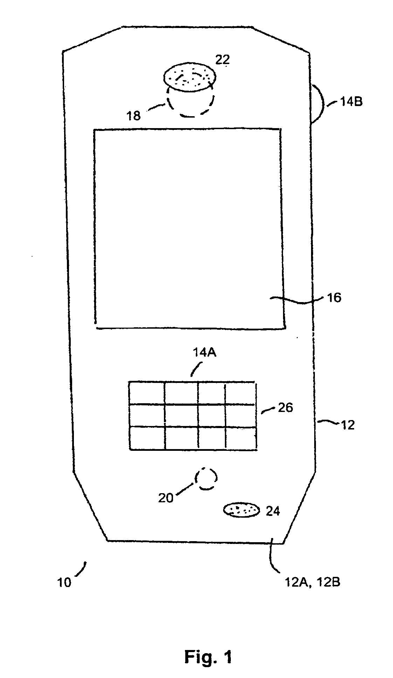

FIG. 1 schematically illustrates a handheld mobile communication device 10 and its components, including a housing 12, input devices (e.g. keyboard 14A or thumbwheel 14B) and display 16, which is preferably a graphic Liquid Crystal Display (LCD), although other types of output devices may alternatively be utilized. Typically, housing 12 is a moulded polycarbonate structure and may be formed via known plastic forming techniques. To assist in assembly of device 10, housing 12 typically comprises two or more pieces which mate together in a fitted arrangement to enclose the internal components and form an exterior casing for device 10. For example, housing 12 may comprise an upper housing (12A) and a lower housing (12B) which fit together. Physically for device 10, housing 12 may be elongated vertically, or may take on other sizes and shapes (including clamshell cover structures). Device 10 has a speaker 18 and microphone 20 (each is shown in dashed outline as each is contained within device 10) which are connected and controlled by electronic circuits (not shown) and software within device 10. These components provide an audible communication interface for voice communications processed by device 10, such as a telephone call. Housing 12A has a series of openings in it providing access to components located inside device 10. Opening 22 is located in an upper region of device 10 and provides a connection to speaker 18, allowing sound generated by speaker 18 to be emitted from within device 10. Opening 24 is located in a lower region in device 10 and provides an access channel for sounds generated by the user to enter device 10 which are subsequently directed towards microphone 20. Opening 26 provides an aperture for keypad 14A to protrude from within device 10 to have its keys extending above the front surface of device 10.

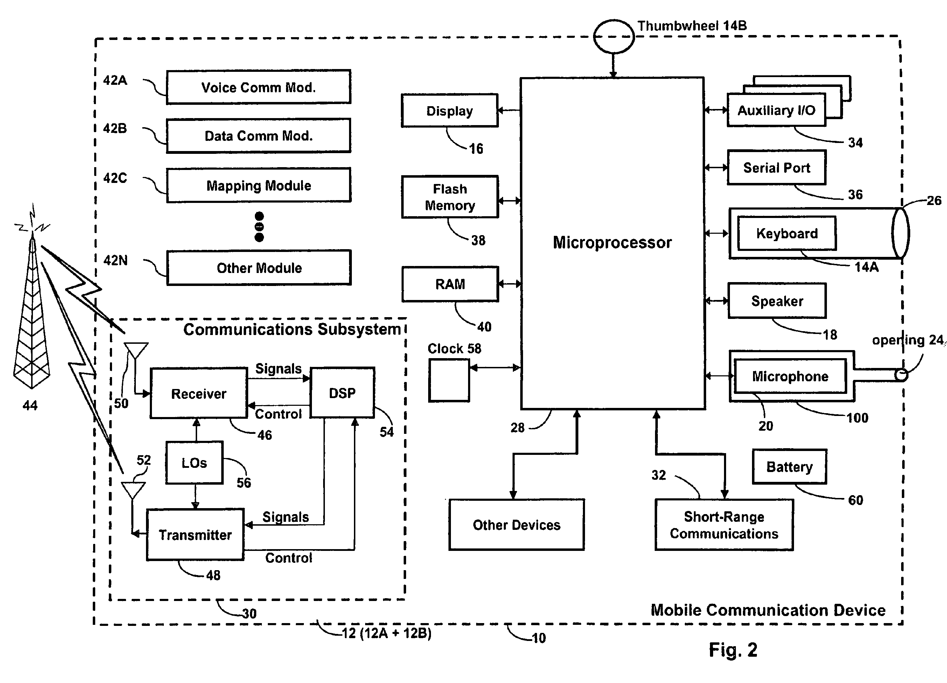

Referring to Fig. 2, operating components of device 10 are shown. A central data processing element in device 10 is microprocessor 28, which is shown as being coupled between keyboard 14A, thumbwheel 14B, display 16, speaker 18 and microphone 20 and a series of other internal devices. For the purposes of the description, the term keypad and keyboard refers to both the exterior mechanical exposed key elements and the underlying switch and activation elements (e.g. elastomers, domes and contact regions). Microprocessor 28 controls the operation of the display 16, as well as the overall operation of the device 10, in response to actuation of keys on the keyboard 14A or thumbwheel 14B by a user. Exemplary microprocessors which may be used for microprocessor 28 include Data 950 (trade-mark) series microprocessors and the 6200 series microprocessor, both available from Intel Corporation.

In addition to the microprocessor 28, other internal components of the device 10 are shown. These devices include: a communication subsystem 30, a short-range communication subsystem 32, a set of auxiliary I/O devices 34 and a serial port 36. Memory for device 10 is provided in flash memory 38 and random access memory (RAM) 40. Internal devices are enclosed within housing 12 and typically are either mounted onto a printed circuit board (PCB), affixed to an interior part of the cover or suspended by some means within housing 12.

The device 10 is preferably a two-way radio frequency (RF) communication device having voice and data communication capabilities. In addition, device 10 preferably has the capability to communicate with other computer systems via the Internet.

Operating system software executed by the microprocessor 28 is preferably stored in a computer readable medium, such as flash memory 38, but may be stored in other types of memory devices, such as read only memory (ROM) or similar storage element. In addition, system software, specific device applications, or parts thereof, may be temporarily loaded into a volatile store, such as RAM 40. Communication signals received by the mobile device may also be stored to RAM 40.

Microprocessor 28, in addition to its operating system functions, enables execution of software applications on device 10. A set of software applications that control basic device operations, such as a voice communication module 42A and a data communication module 42B, may be installed on the device 10 during manufacture or downloaded thereafter. Cell mapping module 42C may also be installed on device 10 during manufacture. As well, additional software modules, illustrated as an other software module 42N, which may be, for instance, a personal information manager (PIM) application, may be installed during manufacture or downloaded thereafter into device 10. PIM application is preferably capable of organizing and managing data items, such as e-mail messages, calendar events, voice mail messages, appointments, and task items. PIM application is also preferably capable of sending and receiving data items via a wireless network 44.

Communication functions, including data and voice communications, are performed through the communication subsystem 30, and possibly through the short-range communication subsystem 32. Communication subsystem 30 includes receiver 46, transmitter 48 and one or more antennae, illustrated as receive antenna 50 and transmit antenna 52 (which are typically combined into a single antenna). In addition, communication subsystem 30 also includes processing module, such as digital signal processor (DSP) 54 and local oscillators (LOs) 56. The specific design and implementation of communication subsystem 30 is dependent upon the communication network in which device 10 is intended to operate. For example, communication subsystem 30 of the device 10 may be designed to operate with the Mobitex (trade-mark), DataTAC (trade-mark) or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access CDMA, Personal Communication Service (PCS), Global System for Mobile Communication (GSM), etc. Other types of data and voice networks, both separate and integrated, may also be utilized with device 10. It will be appreciated that some signals received and transmitted through the subsystem 30 may provide interfering signals with other components in device 10, such as microphone 20.

Network access requirements vary depending upon the type of communication system which can communicate with device 10. For example, in the Mobitex (trade-mark) and DataTAC (trade-mark) networks, mobile devices are registered on the network using a unique Personal Identification Number (PIN) associated with each device. In GPRS networks, however, network access is associated with a subscriber or user of a device. A GPRS device therefore requires a subscriber identity module, commonly referred to as a Subscriber Identity Module (SIM) card, in order to operate on a GPRS network.

When required network registration or activation procedures have been completed, device 10 may send and receive communication signals over communication network 44. Signals received from communication network 44 by the receive antenna 50 are routed to receiver 46, which provides for signal amplification, frequency down conversion, filtering, channel selection, etc., and may also provide analog to digital conversion. Analog-to-digital conversion of received signals allows the DSP 54 to perform more complex communication functions, such as signal demodulation and decoding. In a similar manner, signals to be transmitted to network 44 are processed (e.g., modulated and encoded) by DSP 54 and are then provided to transmitter 48 for digital to analog conversion, frequency up conversion, filtering, amplification and transmission to communication network 44 (or networks) via the transmit antenna 46.

In addition to processing communication signals, DSP 54 provides for control of receiver 46 and transmitter 48. For example, gains applied to communication signals in receiver 46 and transmitter 48 may be adaptively controlled through automatic gain control algorithms implemented in DSP 54.

In a data communication mode, a received signal, such as a text message or web page download, is processed by the communication subsystem 30 and is provided to microprocessor 28. The received signal is then further processed by microprocessor 28 for an output to the display 16, or alternatively to some other auxiliary I/O devices 34. A device user may also compose data items, such as e-mail messages, using keypad 14A, thumb-wheel 14B and/or some other auxiliary I/O device 34, such as a touchpad, a rocker switch or some other type of input device. The composed data items may then be transmitted over communication network 44 via communication subsystem 30.

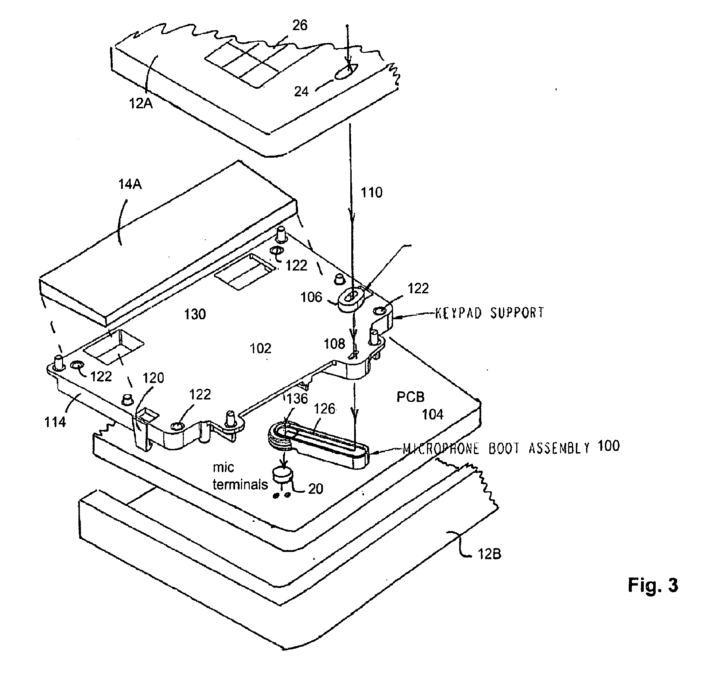

In a voice communication mode, overall operation of device 10 is substantially similar to the data communication mode, except that received signals are output to speaker 18, and received audio signals are provided to microphone 20 for conversion into an electrical signal and processing by device 10. Microphone 20 is preferably an electret condenser microphone (ECM), but any type of microphone may be used which can be mounted to PCB 104 (shown in Fig. 3), including a silicon-based transducer. Microphone boot assembly 100 is coupled to microphone 20 and provides part of an acoustic channel to direct voice signals received from the outside of device 10 at opening 24 to microphone 20.

Short-range communication subsystem 32 enables communication between device 10 and other proximate systems or devices, which need not necessarily be similar devices. For example, the short-range communication subsystem may include an infrared device and associated circuits and components, or a Bluetooth (trade-mark) communication module to provide for communication with similarly-enabled systems and devices.

Clock circuit 58 provides a regular clocking signal for microprocessor 28 and its signal can be used by other components in device 10.

Powering the entire electronics of the mobile handheld communication device is power source 60. Preferably, the power source 60 includes one or more batteries. More preferably, the power source 60 is a single battery pack, especially a rechargeable battery pack. A power switch (not shown) provides a separate on/off switch for device 10.

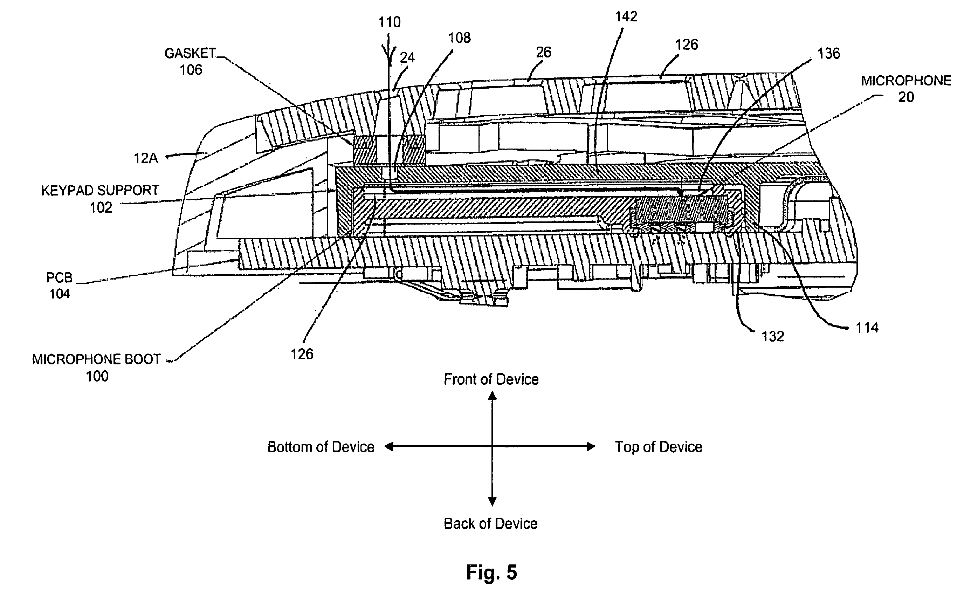

Figs. 3, 4A, 4B and 5 provide further detail on aspects of housing 12 and internal components of device 10. For the purposes of illustration, references to front side, back side, left side, right side, and top and bottom ends are provided using the orientation markings relative to the side view of device 10 as shown in Fig. 5. Therein, the front side of the PCB is the front facing side having display 16 mounted thereto. It will be appreciated that the term "top" may be used interchangeablely the "front" side and the "top" end of device 10 and similarly that the term "bottom" may be used interchangeablely the "back" side and the "bottom" end of device 10. The relative positions will be clear in the context of the use of the terms. These references provide relative positional references for components for convenience only and are not meant to be limiting, unless otherwise noted.

PCB 104 provides a substrate for mounting and supporting the internal components on both of its top and bottom sides and provides some electrical circuitry for the devices, as defined by etchings within the layers of plastic and copper. As such, components can be more densely packed thereon, thereby reducing the size of PCB 104. PCB 104 is securely mountable within housing 12, typically via screws. PCB 104 is a generally planar sandwich of layers of plastic (or FR4) and copper. Microphone 20 is mounted to PCB 104 and makes electrical contact with terminals provided therein. Microphone 20 is shown as an upright-oriented cylinder casing having an aperture on its top allowing ambient sound signals to be received there through and to be converted into an electrical signal. Typically, there are at least two electrical contacts for microphone 20 which are generally located on its bottom side of its casing. Corresponding contact pads are located on PCB 104 to separately engage the contacts and complete an electrical circuit to which can be used by other elements within device 10. In other embodiments, microphone 20 may have an oblong-shaped case.

Certain physical and operational restrictions may affect the location of components on PCB 104 and to their placement on a particular side thereof. For example, a conventional industrial exterior design of device 10 has keypads on its top surface, thereby requiring that the electrical components relating to the keypad 14A be placed on the top side of PCB 104. Similarly, microphone 20 can be sensitive to interference signals from antennae 50 and / or 52. As such, it is preferable to locate microphone 20 as far away as possible from antennae 50 and 52. In one design layout, at least one of antennae 50 and 52 is located on the bottom of PCB 104 in the bottom part of device 10. To assist in isolating microphone 20 from interference from such antennae 50 and / or antenna 52, microphone 20 is located as far away as possible from such antennae.

Further detail on interior and exterior components of device 10 are now provided. In a bottom section of device 10, keypad 14A and microphone 20 are located. In order to have the keys of keypad 14A protruding through the front surface of housing 12A through opening 26, keypad support platform 102 is provided as a frame on which keypad 14A is mounted. Platform 102 is mated to PCB 104, thereby raising keypad 14A up to and through opening 26. Platform 102 is an oblong-shaped component having a flat base 142 mounted on an exterior frame 114. Base 142 is shaped to fit over the bottom portion of PCB 104. Frame 114 is a shaped wall which winds generally around the perimeter of base 142. An internal cavity 112 is formed within frame 114 and under base 142.

Keypad 14A can be mounted on keypad support platform 102 via a friction fit arrangement, screws, tabs and slot arrangements, double sided tape, welds, solder or other means. Keypad support platform 102 can be attached to PCB 104 using similar means. In particular, side latches 120 extending downward from platform 102 provide a snap-fit engagement with the sides of PCB 104 to hold platform 102 on top of PCB 104. Screw holes 122 allow screws to be inserted there through to further secure platform 102 to PCB 104.

When platform 102 is mounted onto PCB 104, cavity 112 is formed between PCB 104 and base 142. Different sized cavities can be provided by providing different shapes and sizes for platform 102. Cavity 112 allows components to be placed underneath platform 102 on PCB 104.

Taking advantage of the additional space for components provided by cavity 114, device 10 locates microphone 20 therein. Preferably the location of microphone 20 is set such that it is physically far enough away from other components which may interfere with the operation of microphone 20. It is also located such that its aperture faces upward, in a common orientation for voice communication devices. In particular, preferably microphone 20 is sufficiently far from antennae 50 and 52. More preferably, the location of microphone 20 is sufficiently far from other potentially interfering components so as to reduce or eliminate the need to provide radio frequency (RF) shielding through a separate shield for microphone 20. In some situation, however, it may still be beneficial to provide separate RF shielding for microphone 20.

With microphone 20 being located within cavity 112, it is also isolated from opening 24 in housing 12A. In order to channel audible signals received at opening 24 to microphone 20, the embodiment provides an acoustic channel to acoustically connect opening 24 to microphone 20. The acoustic channel generally follows a path as shown by arrow 110. Briefly, a series of components having conduits are linked together to define the acoustic channel. Each component is described in turn.

From opening 24, the acoustic channel comprises gasket 106, aperture 108 in platform 102 and boot assembly 100. Gasket 106 is a pliable upright tube which has its top opening mated to opening 24 and its bottom opening mated to aperture 108. Gasket 106 may be made from urethane foam. The bottom end of gasket 106 is preferably fixed to keypad support platform 102 with double-sided tape. Aperture 108 provides a vertical hole in platform 102. Opening 24, gasket 106 and aperture 108 are preferably aligned in a vertical column. However, different shapes and arrangements can be provided such that opening 24 and aperture 108 are not aligned directly to each other and that gasket 106 is shaped to still mate with both elements and provide part of the acoustic channel there between. When housings 12A and 12B are mated together, gasket 106 may compress between opening 24 and platform 102.

In the embodiment, aperture 108 is located at a bottom portion of platform 102. Microphone 20 is located in underneath a middle portion of platform 102. As such, to complete the acoustic channel, microphone boot assembly 100 provides a channel between the bottom side of keypad support platform 102 about aperture 108 to microphone 20.

The boot assembly 100 carries the acoustic signal from the lower opening of aperture 108 in the bottom portion of platform 102 to the middle portion of platform 102.

Microphone boot assembly 100 is a generally columnar-shaped device which lies laterally on PCB 104 underneath platform 102. At one end, microphone boot assembly 100 encapsulates microphone 20 such that its aperture is exposed to an internal channel 126 running along its length. An end of channel 126 also connects to aperture 108, when boot assembly 100 is properly installed. The interior channel 126 is formed by the walls of boot assembly 100 and the bottom surface of platform 102. Boot assembly 100 provides a housing, as a microphone coupler, for microphone 20 as well as a portion of the acoustic channel.

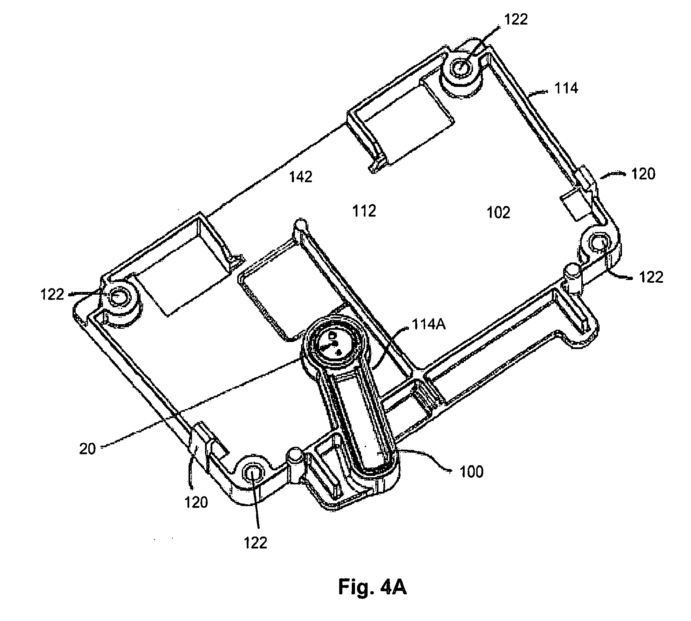

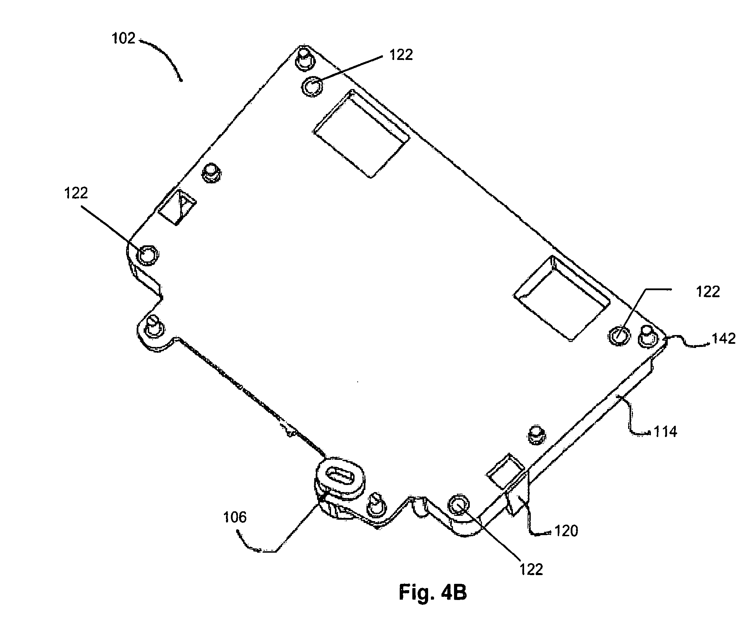

Referring to Fig. 4A, microphone boot assembly 100 is held within platform 102 via a shaped portion of frame 114, noted as 114A, which preferably is shaped to provide a close friction fit for the exterior form of microphone boot assembly 100, allowing boot assembly 100 to be held within the shaped portion of frame 114 to reduce or eliminate the need for the use of adhesives or other binding technologies.

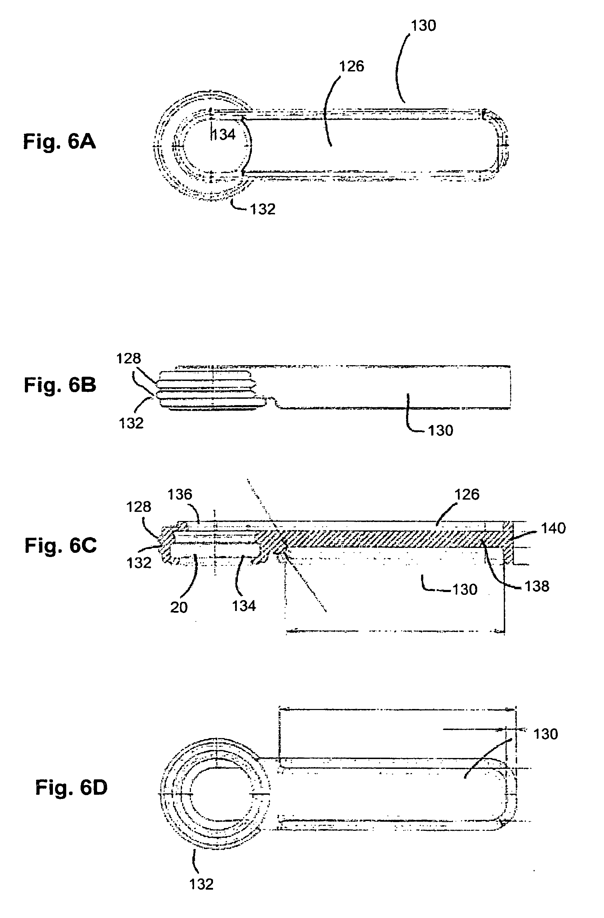

Referring to Figs. 6A - 6D, further detail on boot assembly 100 is shown. Generally boot assembly 100 comprises an elongated lateral section 130 and a microphone coupling section 132 located at one end of section 130. Coupling section 132 is an upright cylindrical section open at both ends having interior volume 134 preferably shaped to fit snugly around the exterior sides of microphone 20 allowing a positive and secure insertion of microphone 20 in volume 134. Further the shape of interior volume 134 allows the contacts on the bottom of microphone 20 to be exposed to and make connection with corresponding contact pads on PCB 104 for the microphone. Coupling section 132 is shaped to have a height such that the interior volume 134 has a gap 136 above microphone 20 to allow audible signals to be carried from lateral section 130 to volume 134 and to the aperture of microphone 20. It will be appreciated that microphone 20 may be inserted into volume 134 and may be snugly held therein, allowing microphone body 100 and microphone to be inserted as one combined component during the assembly process of device 10.

Elongated section 130 is generally comprised of a horizontally extending beam 138 projecting outward from coupling section 132, below gap 136. On the top surface of beam 138 is wall 140 which runs along the exterior perimeter of section 132. The height of wall 140 extends from the bottom of coupling section 132 to the top of coupling section 132. As such, interior channel 126 is formed above beam 138. When microphone 20, boot assembly 100 and support 102 are assembled and mounted on PCB 104, at the anterior end of beam 138, channel 126 is in communication with aperture 108 on keypad support platform 102 and at the other end of beam 138, channel 126 is in communication with gap 136, thereby forming a channel for the last section of the acoustic channel. To complete the last section of the acoustic channel, when boot assembly 100 is inserted into frame section 114A, the top surface of boot assembly 100 is pressed flush against the bottom surface of platform 102. As such, the bottom surface of platform 102 forms a cover for channel 126. As walls 114A are shaped to enclose boot assembly 100 against platform 102, the walls 114A assist in sealing the interface between boot assembly 100 and platform 102. To assist in retaining boot assembly 100 within section 114A, outwardly extending features may be provided on the lateral exterior surfaces of boot assembly 100 which provide points of friction between assembly 100 and sections 114A. For example, lateral ridges 128 may be provided on the exterior of section 132.

Boot assembly 100 is made of a rubber-like, flexible material and is pliable allowing it to snugly fit around microphone 20. In other embodiments, selected surfaces of boot assembly 100 may be metallized to provide RF shielding for microphone 20. If surfaces were metallized, it would be preferable that such surfaces do not significantly compromise the performance of other components, such as antennae 50 and / or 52.

It will be appreciated that the acoustic channel may have some effect on the acoustic frequency response of the audible signals as they wind through the channel from the opening 24 to microphone 20. Generally, the channel provides a relatively straight vertical section descending from opening 24 then a 90 degree turn through interior volume 126 and another 90 degree turn to the aperture of microphone 20. In most instances, the two 90 degree turns do not have a significant impact on the acoustics. It will be appreciated that the overall length of the acoustic channel, including the two 90 degree turns, may create undesirable resonances in the frequency range of interest. Signal shaping may be provided to address such resonances. If signal shaping is required, an acoustic mesh can be inserted in the acoustic channel to act as a damper for targeted (generally high) frequencies in the signals. The mesh can be of any material known in the art and can be inserted in any appropriate location in the acoustic channel. However, a more effective location for the mesh is to have it placed as close as possible to opening 24. In one embodiment, a layer of acoustic mesh 144 can be placed between gasket 106 and platform 102. A layer of double-sided tape can be used to attach mesh 144 to the bottom of gasket 106 and another layer of double-sided tape can be used to secure the bottom side of the mesh to platform 102. In other embodiment, signal shaping through DSP processing of the electronic signals produced by microphone 20 may be provided to address any signal shaping requirements. For example, the DSP processing may attempt to fit the signals within certain operating masks for certain communication standards, such as the known GSM mask.

In one embodiment, the length of volume 126 to the center of volume 134 is approximately 15 mm; the height is approximately 0.5 mm; and the width is approximately 2.7 mm. Other dimensions for other applications may be used.

In other embodiments, a fully enclosed shaped tube may be used to connect the bottom opening of aperture 108 to microphone 20.

In other embodiments, the acoustic channel may be routed downward from opening 24 and pass beside platform 102. Therein, boot assembly 100 may extend from underneath platform 102 and have an elbow conduit rising upwards to meet opening 24. In such an embodiment, gasket 106 may not be required. However, an acoustic mesh may still be used.

Although the invention has been described with reference to certain specific embodiments, various modifications thereof will be apparent to those skilled in the art without departing from the scope of the invention as outlined in the claims appended hereto.

## Claims

1. A communication device (10), comprising:
a printed circuit board PCB'(104);
a platform connected to said PCB, said platform (102) having an aperture (108) therein;
a microphone (20);
an antenna (50, 52);
a housing (12) for housing said PCB, said microphone and said antenna, said housing (12) providing an opening (24) for receiving an acoustic signal, said microphone located in a first location on said PCB in said housing, said antenna located in a second location in said housing, said opening located in a third location on said housing;
a boot assembly (100) a first part of which encloses said microphone (20), said boot assembly forming part of an acoustic channel for conveying said acoustic signal from said opening (24) to said microphone (20), said acoustic channel further formed by a bottom surface of said platform (102) when said platform (102) is mounted over said boot assembly (100) and part of said acoustic channel connects to a bottom side of said aperture (108) in said platform; and
a gasket (106) having an internal conduit, said gasket (106) mounted at one end to a top side of said aperture and at another end to said opening,
wherein a first distance between said microphone and said antenna exceeds a second distance between said opening and said antenna.

2. The communication device as claimed in claim 1, wherein said opening in said housing (106) is located in a lower end of said housing.

3. The communication device as claimed in any one of claims 1 or 2, wherein said microphone is arranged on said PCB (104) to have an aperture (108) of said microphone facing upward from said PCB (104).

4. The communication device as claimed in claim 3, wherein said boot assembly (100) comprise:
a coupling section shaped to hold said microphone (20) with said aperture (108) facing upward from said PCB (104);
a beam (138) extending outwardly from said coupling section; and
a wall (140) extending above a perimeter of said beam, said wall being shaped to form said channel within said wall and above said beam and being shaped to define an air gap above said aperture of said microphone.

5. The communication device as claimed in claim 4, wherein said channel is adapted to form a first 90 degree turn from said microphone and a second 90 degree turn to said aperture in said support

6. The communication device as claimed in claim 4 or claim 5, wherein an acoustic mesh is provided in said acoustic channel.

7. The communication device as claimed in any one of claims 4 to 6, wherein digital signal processing is provided to adjust signals generated by said microphone to accommodate for acoustic characteristics of said acoustic channel.

8. The communication device as claimed in any one of claims 4 to 7, wherein said coupling section comprises a lateral rib extending around its exterior to mate with an interior surface of said frame of said platform.

## Patentansprüche

1. Kommunikationsvorrichtung (10) mit:
einer Leitplatte (104),
einer mit der Leiterplatte verbundenen Plattform (102), die darin einen Durchlass (108) aufweist,
einem Mikrofon (20),
einer Antenne (50, 52),
einem Gehäuse (12) zum Unterbringen der Leiterplatte, des Mikrofons und der Antenne, wobei das Gehäuse (12) eine Öffnung (24) zum Empfangen eines akustischen Signals bereitstellt, wobei sich das Mikrofon an einem ersten Ort auf der Leiterplatte im Gehäuse befindet, sich die Antenne an einem zweiten Ort im Gehäuse befindet, sich die Öffnung an einem dritten Ort auf dem Gehäuse befindet,
einer Boot-Baugruppe (100), wovon ein erstes Teil das Mikrofon (20) enthält, wobei die Boot-Baugruppe einen Teil eines akustischen Kanals zum Leiten des akustischen Signals von der Öffnung (24) an das Mikrofon (20) bildet, wobei der akustische Kanal ferner von einer Unterfläche der Plattform (102) gebildet ist, wenn die Plattform (102) über der Boot-Baugruppe (100) angebracht ist und ein Teil des akustischen Kanals mit einer Unterseite des Durchlasses (108) in der Plattform verbunden ist, und
einer Dichtung (106) mit einer internen Leitung, wobei die Dichtung (106) an einem Ende an einer Oberseite des Durchlasses und am anderen Ende an der Öffnung angebracht ist,
wobei ein erster Abstand zwischen dem Mikrofon und der Antenne größer als ein zweiter Abstand zwischen der Öffnung und der Antenne ist.

2. Kommunikationsvorrichtung nach Anspruch 1, wobei sich die Öffnung im Gehäuse (106) an einem unteren Ende des Gehäuses befindet.

3. Kommunikationsvorrichtung nach einem der Ansprüche 1 oder 2, wobei das Mikrofon auf der Leiterplatte (104) so angeordnet ist, dass der Durchlass (108) des Mikrofons von der Leiterplatte (104) nach oben zeigt.

4. Kommunikationsvorrichtung nach Anspruch 3, wobei die Boot-Baugruppe (100) folgendes umfasst:
einen Kuppelabschnitt, der zum Halten des Mikrofons (20) mit dem von der Leiterplatte (104) nach oben zeigenden Durchlass (108) geformt ist, einen sich aus dem Kuppelabschnitt hinaus erstreckenden Ausleger (138) und
eine sich über eine Umfassung des Auslegers erstreckende Wand (140), die geformt ist, den Kanal innerhalb der Wand und oberhalb des Auslegers zu bilden, und geformt ist, einen Luftspalt oberhalb des Durchlasses des Mikrofons zu definieren.

5. Kommunikationsvorrichtung nach Anspruch 4, wobei der Kanal dazu ausgelegt ist, eine erste 90°-Drehung vom Mikrofon und eine zweite 90°-Drehung zum Durchlass in der Auflage zu bilden.

6. Kommunikationsvorrichtung nach einem der Ansprüche 4 oder 5, wobei im akustischen Kanal ein akustisches Netz bereitgestellt ist.

7. Kommunikationsvorrichtung nach einem der Ansprüche 4 bis 6, wobei digitale Signalverarbeitung bereitgestellt wird, um vom Mikrofon erzeugte Signale zu berichtigen, um sie an akustische Besonderheiten des akustischen Kanals anzupassen.

8. Kommunikationsvorrichtung nach einem der Ansprüche 4 bis 7, wobei der Kuppelabschnitt eine seitliche Rippe umfasst, die sich um seine Außenseite erstreckt, um mit einer inneren Oberfläche des Rahmens der Plattform zusammenzupassen.

## Revendications

1. Dispositif de communication (10), comprenant :
une carte de circuits imprimés (104) ;
une plate-forme connectée à ladite carte, ladite plate-forme (102) présentant une ouverture (108) en son sein ;
un microphone (20) ;
une antenne (50, 52) ;
un boîtier (12), destiné à loger ladite carte, ledit microphone et ladite antenne, ledit boîtier (12) fournissant une découpe (24) pour recevoir un signal acoustique, ledit microphone étant situé à un premier endroit sur ladite carte dans ledit boîtier, ladite antenne étant située à un deuxième endroit dans ledit boîtier et ladite découpe étant située à un troisième endroit sur ledit boîtier ;
un ensemble d'amorçage (100) dont une première partie abrite ledit microphone (20), ledit ensemble d'amorçage faisant partie d'un canal acoustique destiné à conduire ledit signal acoustique entre ladite découpe (24) et ledit microphone (20), ledit canal acoustique étant en outre formé par une surface inférieure de ladite plate-forme (102) lorsque ladite plate-forme (102) est montée sur ledit ensemble d'amorçage (100) et une partie dudit canal acoustique se raccordant à un côté inférieur de ladite ouverture (108) dans ladite plate-forme ;
un joint (106) possédant un conduit intérieur, ledit joint (106) étant monté à une de ses extrémités sur un côté supérieur de ladite ouverture et à une autre extrémité sur ladite découpe ;
dans lequel une première distance entre ledit microphone et ladite antenne dépasse une deuxième distance entre ladite découpe et ladite antenne.

2. Dispositif de communication selon la revendication 1, dans lequel ladite découpe dans ledit boîtier (106) est située sur une extrémité inférieure dudit boîtier.

3. Dispositif de communication selon l'une quelconque des revendications 1 et 2, dans lequel ledit microphone est implanté sur ladite carte (104) de manière à ce qu'une ouverture (108) dudit microphone soit tournée vers le haut à partir de ladite carte (104).

4. Dispositif de communication selon la revendication 3, dans lequel ledit ensemble d'amorçage (100) comprend :
une section de couplage configurée de manière à maintenir ledit microphone (20) avec ladite ouverture (108) tournée vers le haut à partir de ladite carte (104) ;
une poutre (138) s'étendant vers l'extérieur à partir de ladite section de couplage ;et
une paroi (140) s'étendant au-dessus d'un périmètre de ladite poutre, ladite paroi étant configurée pour former ledit canal dans ladite paroi et au-dessus de ladite poutre et étant configurée pour définir un espace au-dessus de ladite ouverture dudit microphone.

5. Dispositif de communication selon la revendication 4, dans lequel ledit canal est conçu pour former un premier coude à 90 degrés à partir dudit microphone et un deuxième coude à 90 degrés vers ladite ouverture dans ledit support.

6. Dispositif de communication selon la revendication 4 ou la revendication 5, dans lequel un tissu acoustique est prévu dans ledit canal acoustique.

7. Dispositif de communication selon l'une quelconque des revendications 4 à 6, dans lequel un traitement numérique du signal est prévu pour ajuster les signaux produits par ledit microphone afin de tenir compte des caractéristiques acoustiques dudit canal acoustique.

8. Dispositif de communication selon l'une quelconque des revendications 4 à 7, dans lequel ladite section de couplage comprend une nervure latérale s'étendant autour de sa circonférence, afin de correspondre à une surface intérieure dudit cadre de ladite plate-forme.
